# EUROPEAN PATENT APPLICATION

(11) **EP 4 852 493 A1**
(43) Date of publication of application: **09.12.2026**
(21) Application number: 24921451.1
(22) Date of filing: 20.09.2024
(51) Int. Cl.: H04W 24/04

(54) **NETWORK COVERAGE BLIND SPOT DETECTION METHOD, COMMUNICATION NODE, AND STORAGE MEDIUM**

(30) Priority: 02.02.2024 CN 202410153254
(71) Applicant: ZTE Corporation, Shenzhen, Guangdong 518057 (CN)
(72) Inventor: SONG, Anyang, Shenzhen, Guangdong 518057 (CN); LV, Xingzai, Shenzhen, Guangdong 518057 (CN)
(74) Representative: Aipex B.V.
(86) International application number: PCT/CN2024/119972
(87) International publication number: WO 2025/161427

(57) **Abstract**

Provided are a network coverage blind spot detection method, a communication node, and a storage medium. The method includes sending a task confirmation message for network coverage blind spot detection to a target UE and storing corresponding task transaction information in a blockchain; and in response to receiving blind spot detection data from the target UE, determining a network coverage blind spot according to the blind spot detection data, granting a reward to the target UE, and storing task completion information in the blockchain.

## Description

### TECHNICAL FIELD

The present application relates to the field of wireless communication technology, for example, a network coverage blind spot detection method, a communication node, and a storage medium.

### BACKGROUND

During network planning and optimization, wireless network coverage data are mainly obtained through drive tests performed by operators, which is relatively inefficient, and signal coverage in scenarios such as campuses and factory areas has always been a challenge. Due to factors such as buildings, terrain, signal attenuation, and the inaccessibility of non-public areas and indoor areas, these areas often have uneven signal coverage and blind spots. Because network coverage blind spot detection relies on drive-test data, operators have difficulty entering private areas or comprehensively and accurately collecting data for all areas, resulting in an inability to accurately understand coverage conditions. Therefore, the efficiency and credibility of coverage blind spot detection are required to be improved.

### SUMMARY

The present application provides a network coverage blind spot detection method, a communication node, and a storage medium.

An embodiment of the present application provides a network coverage blind spot detection method. The method is applied to a network-side node. The method includes sending a task confirmation message for network coverage blind spot detection to a target user equipment (UE) and storing corresponding task transaction information in a blockchain; and in response to receiving blind spot detection data from the target UE, determining a network coverage blind spot according to the blind spot detection data, granting a reward to the target UE, and storing task completion information in the blockchain.

An embodiment of the present application provides a network coverage blind spot detection method. The method is applied to a UE. The method includes receiving a task confirmation message for network coverage blind spot detection; executing a network coverage blind spot detection task according to the task confirmation message to obtain blind spot detection data; and sending the blind spot detection data to a network-side node.

An embodiment of the present application provides a communication node. The communication node includes a memory, a processor, and a computer program stored in the memory and executable by the processor. When executed by the processor, the program causes the processor to perform the network coverage blind spot detection method.

An embodiment of the present application provides a computer-readable storage medium storing a computer program which, when executed by a processor, causes the processor to perform the network coverage blind spot detection method.

### BRIEF DESCRIPTION OF DRAWINGS

FIG. 1 is a flowchart of a network coverage blind spot detection method according to an embodiment.
FIG. 2 is a diagram of a network architecture for network coverage blind spot detection according to an embodiment.
FIG. 3 is a flowchart of a network coverage blind spot detection method according to an embodiment.
FIG. 4 is a diagram of a user-side architecture for network coverage blind spot detection according to an embodiment.
FIG. 5 is a diagram illustrating interaction between a network side and a user side in network coverage blind spot detection according to an embodiment.
FIG. 6 is a diagram illustrating the structure of a network coverage blind spot detection apparatus according to an embodiment.
FIG. 7 is a diagram illustrating the structure of a network coverage blind spot detection apparatus according to an embodiment.
FIG. 8 is a diagram illustrating a hardware structure of a communication node according to an embodiment.

### DETAILED DESCRIPTION

The present application is described hereinafter in conjunction with the drawings and embodiments. The embodiments described herein are intended to explain the present application. Provided that no conflict exists, the embodiments of the present application and features therein can be combined with each other in any manner. For ease of description, the drawings illustrate only part related to the present application.

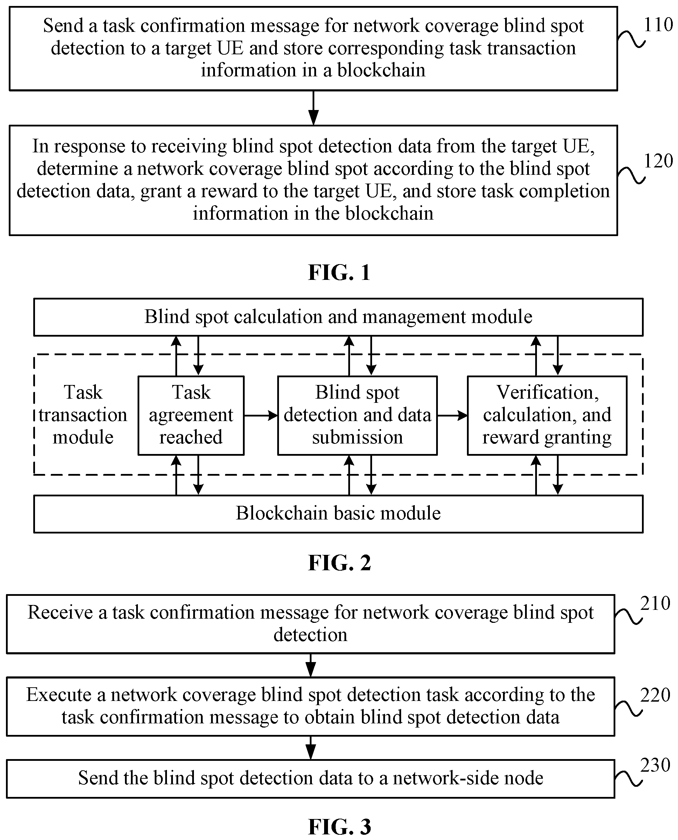

FIG. 1 is a flowchart of a network coverage blind spot detection method according to an embodiment. The method may be applied to a network-side node, such as a base station or an access point (AP). As shown in FIG. 1, the method of this embodiment includes 110 and 120.

In 110, a task confirmation message for network coverage blind spot detection is sent to a target UE, and corresponding task transaction information is stored in a blockchain.

In this embodiment, the UE is a user-side node. During use by a user, the UE may move to a designated location and has a function of detecting network coverage conditions. The target UE mainly refers to a UE that executes a network coverage blind spot detection task. The target UE may be selected or configured by the network-side node, may be determined through negotiation with the network-side node, or may be any UE connected to the network-side node. This embodiment does not limit the manner in which the target UE is determined.

The task confirmation message may be used to instruct the target UE to execute a corresponding network coverage blind spot detection task (hereinafter referred to as a task). The task confirmation message may include information such as a detection area, a detection target (network coverage parameters to be detected, such as a coverage range, signal strength, and/or a data transmission rate), detection time (a task deadline), a detection mode, and/or an incentive mode. There may be multiple target UEs. The network-side node may instruct the multiple target UEs to execute different tasks, thereby improving the detection efficiency and ensuring comprehensive detection. In addition, granting a certain reward to the target UE can increase the willingness of the user-side node to perform detection and can improve the reliability of the detection result to a certain extent.

For task confirmation messages of different target UEs, the information items may be the same, may be different, or may overlap. For example, target UE A and target UE B may have different detection areas, while the detection areas of target UE B and target UE C may overlap. As another example, target UE A and target UE B may use the same detection mode, while target UE B and target UE C may use different detection modes. As another example, the detection time and the network coverage parameters to be detected may be the same for all UEs. The process in which the network-side node confirms the target UE and the corresponding task and sends the task confirmation message and the target UE receives the task confirmation message may be understood as generating a task transaction. Relevant task transaction information may be stored in the blockchain to record the transaction status of each task. The task transaction information may include a task identifier (ID), a corresponding target UE ID, and/or a digest of task confirmation information.

In 120, in response to receiving blind spot detection data from the target UE, a network coverage blind spot is determined according to the blind spot detection data, a reward is granted to the target user equipment (UE), and task completion information is stored in the blockchain.

In this embodiment, the blind spot detection data may include information such as a detection area, a detection result of a network coverage parameter, detection time of the blind spot detection data, and/or a detection mode. The network coverage parameter may include, for example, location coordinates of the detection area and corresponding reference signal received power (RSRP) and/or a signal-to-interference-plus-noise ratio (SINR). After completing a corresponding task, each target UE uploads the obtained blind spot detection data to the network-side node. The network-side node may determine a network coverage blind spot according to the received blind spot detection data and grant a reward to the corresponding target UE. The reward may be an amount of money, a discount coupon, a redemption coupon, a data package, and/or free call duration. The reward content for different target UEs may be the same or different. In addition, the values of rewards for different target UEs may be the same (for example, each target UE is rewarded RMB 10). The values of rewards for different target UEs may also be different. For example, the value of a reward may be determined according to the time consumed by the target UE in executing the corresponding task, whether functions of the target UE are comprehensive, historical detection records of the target UE, and/or credibility of the target UE.

The task completion information may be stored in the blockchain to record the completion status of each task. The task completion information may include a task identifier (ID), a corresponding target UE ID, detection time, blind spot detection data, and/or reward information.

This embodiment provides a blockchain-based wireless network coverage blind spot detection method in which the UE participates. Blockchain technology is used to record and verify various tasks and transaction information, thereby ensuring that the entire process is secure, credible, and tamper-resistant. Distributing tasks to different target UEs allows the target UEs to enter areas such as campuses and factory areas according to actual requirements, thereby making full use of UE resources and improving the efficiency and credibility of blind spot detection.

In an embodiment, before sending the task confirmation message to the target UE, the method also includes:
101: broadcasting a task release message for network coverage blind spot detection and writing the task release message into a smart contract of the blockchain.

The task release message carries at least one of: a publisher identifier, a task identifier, a task requirement quantity, a detection target, a test plan, a task deadline, an incentive mode, or a task acceptance criterion.

In this embodiment, by broadcasting the task release message, the network-side node can notify the UE within the network that network coverage blind spot detection is required and can then establish a connection with the UE or perform negotiated interaction. On this basis, the UE may also be screened to determine the target UE. The task release message may be stored in the blockchain to record the initial configuration of each task. The publisher identifier may be an identifier of the network-side node. The task identifier may be an identifier uniquely representing a task. The task requirement quantity may be the quantity of target UEs or the quantity of tasks required for network coverage blind spot detection. The detection target mainly refers to a network coverage parameter to be detected. The test plan may refer to test time, a test location, test equipment, and/or a test method. The task deadline mainly refers to the validity period of a task or a time requirement for the target UE to execute the task. The incentive mode may refer to the content, value, and/or calculation manner of a reward. The task acceptance criterion mainly refers to a criterion for determining that blind spot detection data are valid, for example, the upload time of the blind spot detection data is within the task deadline, the blind spot detection data conform to a required format, the value is within a preset range, and/or no conflict exists between blind spot detection data from different target UEs.

In an embodiment, before sending the task confirmation message to the target UE, the method also includes:
103: receiving a task acceptance request from at least one UE; and
105: determining, from the at least one UE according to a task acceptance time and the number of task acceptances, a target UE that executes a network coverage blind spot detection task.

In this embodiment, after receiving the task release message, the UE may send a task acceptance request to the network-side node to indicate that the UE is capable of executing the corresponding network coverage blind spot detection task. The network-side node may receive task acceptance requests from one or more UEs and may determine the target UE from these UEs that send the task acceptance requests according to the task acceptance time and the number of task acceptances. For example, for a single task, after the task release message is broadcast, the network-side node may select a specified number of UEs that accept the task earliest and designate each selected UE as a target UE for the task, where the specified number is less than or equal to the number of UEs that accept the task; alternatively, the network-side node may select a specified number of UEs that accept the task within a preset time period after the task release message is broadcast and designate each selected UE as a target UE for the task, where the specified number is less than or equal to the number of UEs that accept the task; alternatively, the network-side node may select a preset proportion of the UEs that accept the task and whose task acceptance times meet a requirement and designate each selected UE as a target UE for the task.

In an embodiment, the task acceptance request carries at least one of: a UE identifier, a task identifier, a task acceptance time, or a digest of a task release message. The task identifier may indicate the task associated with the UE's current task acceptance, that is, a task that the UE is capable of accepting or executing. The digest of the task release message may be understood as key information extracted from the task release message, such as the publisher identifier and the task identifier.

The network-side node may broadcast, for each task, a task release message including a corresponding task identifier. One UE may send task acceptance requests for at least one task. For each task, the network-side node may determine at least one target UE.

In an embodiment, in response to receiving the blind spot detection data from the target UE, determining the network coverage blind spot according to the blind spot detection data includes:
122: in response to receiving the blind spot detection data from multiple target UEs, comparing blind spot detection data of the multiple target UEs and evaluating the quality of blind spot detection data of each target UE;
124: determining blind spot detection data of a target UE that meets a task acceptance criterion according to the task acceptance criterion and the quality of the blind spot detection data of each target UE; and
126: determining the network coverage blind spot according to the blind spot detection data that meet the criterion.

In this embodiment, the blind spot detection data of different target UEs may relate to the same detection area. For the same detection area, the blind spot detection data of different target UEs may differ to a certain extent. For example, the accuracy of the blind spot detection data of target UE A may be higher than that of target UE B. As another example, the collection frequency of the blind spot detection data of target UE A may be higher than that of target UE B. As still another example, the blind spot detection data of target UE A may conflict with the blind spot detection data of target UE B.

Through a comparison of the blind spot detection data of the respective target UEs, the quality of the blind spot detection data may be evaluated according to the accuracy, collection frequency, and/or the function mode of the target UEs. When the blind spot detection data of different target UEs conflict, lower-quality blind spot detection data may be discarded, while higher-quality blind spot detection data may be retained.

The task acceptance criterion mainly refers to a criterion for determining that blind spot detection data are valid. For example, functions of the target UE are complete, the detection mode of the target UE meets a requirement, the upload time of the blind spot detection data is within the task deadline, the blind spot detection data conform to a required format, the value of the detection target is within a preset range, and/or no conflict exists between blind spot detection data from different target UEs. According to the task acceptance criterion and the quality of the blind spot detection data of each target UE, blind spot detection data that meet the criterion may be determined. The blind spot detection data that meet the criterion have relatively high credibility and may be used by the network-side node to determine a network coverage blind spot. For example, if the blind spot detection data of target UE A meet the criterion and indicate that area a1 has no network coverage, then area a1 may be determined as a network coverage blind spot. As another example, if the blind spot detection data of both target UE A and target UE B meet the criterion, the detection target in the blind spot detection data of target UE A indicates that area a1 has no network coverage, and the detection target in the blind spot detection data of target UE B indicates that area b1 has no network coverage, then an overlapping area between area a1 and area b1 may be determined as a network coverage blind spot.

In an embodiment, the operation of granting the reward to the target UE includes granting the reward to the target UE according to a first incentive mode. The first incentive mode means that rewards are granted to multiple target UEs according to a chronological order of submission times of blind spot detection data that meet a task acceptance criterion, and the rewards corresponding to the multiple target UEs decrease in sequence.

In this embodiment, the target UE may refer to a UE that executes the network coverage blind spot detection task and whose blind spot detection data meet the criterion. For multiple target UEs, the network-side node grants a corresponding reward to each target UE. The earlier the submission time of the blind spot detection data, the higher the value of the reward for the corresponding target UE. For example, for three target UEs, rewards of RMB 20, RMB 15, and RMB 10 may be granted respectively according to the respective submission times of the blind spot detection data. As another example, according to the submission times, the first 30% of submitters may be assigned higher reward weights, the reward weights for submitters ranking from 31% to 80% may remain unchanged, and the reward weights for the remaining submitters may be reduced. On this basis, the willingness of the target UEs to participate and the task execution efficiency can be further improved.

The submission time reflects the speed or efficiency with which the target UE executes the corresponding task. The submission time may refer to the absolute time at which each target UE uploads the blind spot detection data. For example, for the same task, the network-side node may send a task confirmation message to each of multiple target UEs at the same time and grant each target UE a reward, with the reward amounts decreasing according to the chronological order of the absolute times at which the target UEs upload the blind spot detection data. The submission time may also be determined according to the time taken by a target UE to execute the corresponding task, such as the time from receiving the task confirmation message to uploading the blind spot detection data, or the time from the network-side node sending the task confirmation message to receiving the blind spot detection data, and the like. In this case, the network-side node is not required to send a task confirmation message to each of the multiple target UEs at exactly the same time; a certain time difference may be allowed.

In an embodiment, granting the reward to the target UE includes granting the reward to the target UE according to a second incentive mode. The second incentive mode means that rewards are granted to multiple target UEs corresponding to blind spot detection data that meet a task acceptance criterion, and the rewards corresponding to the multiple target UEs that meet the criterion are equal.

In this embodiment, the target UE may refer to a UE that executes the network coverage blind spot detection task and whose blind spot detection data meet the criterion. For multiple target UEs, the network-side node grants a corresponding reward to each target UE, and the rewards granted to the target UEs whose blind spot detection data meet the criterion are equal. For example, for three target UEs, a reward of RMB 10 may be granted to each target UE according to the submission time of the blind spot detection data from the target UE. In this case, the requirements for task execution efficiency and real-time performance are relatively low, and the computational load of the network-side node is relatively small. The incentive mode may be applicable when the number of network coverage blind spots to be detected is large, the number of users in the network coverage blind spots to be detected is large, or the number of UEs that accept the task or target UEs is large.

In an embodiment, before sending the task confirmation message to the target UE, the method also includes assigning a network coverage blind spot detection task to the target UE according to at least one of a customer complaint area or a potential blind spot.

The potential blind spot is determined by at least one of statistics, clustering, or neural-network prediction performed on the current network coverage data.

In this embodiment, the customer complaint area may refer to a network coverage blind spot reported by a customer through a complaint, a report, or another channel. The potential blind spot may refer to a possible network coverage blind spot identified by the network-side node based on an analysis of the current network coverage data. After determining the target UEs, the network-side node may assign network coverage blind spot detection tasks to the target UEs. For example, if there are x1 customer complaint areas and/or potential blind spots and y1 target UEs, network coverage blind spot detection tasks for the x1 areas may be assigned to the y1 target UEs. It should be ensured that all of the x1 areas are detected, and areas for which the respective target UEs are responsible may overlap.

The potential blind spot is determined by at least one of statistics, clustering, or neural-network prediction performed on the current network coverage data. The current network coverage data may include, for each area during the current preset time period and one or more preceding preset time periods, the network signal quality, whether a customer complaint has been received, whether a data service is available, and/or the data service quality (which may be evaluated according to an interruption rate and/or a data transmission rate). For example, according to a statistical approach, an area in which the network signal quality is lower than a threshold, the customer complaint rate is higher than a threshold, and/or the data service quality is lower than a threshold may be determined as a potential blind spot, where an average signal quality within a preset time period may be calculated as the network signal quality. According to a clustering approach, the areas may be clustered based on the network signal quality, the customer complaint rate, and/or the data service quality, and one or more classes of areas having a relatively poor network signal quality, a relatively high customer complaint rate, and/or a relatively poor data service quality may be determined as potential blind spots. According to a neural-network-based prediction approach, the current network coverage data may be input into a trained neural network model, where the neural network model is trained to have the capability of predicting whether one or more areas are potential blind spots, and the potential blind spots may be determined based on output of the neural network model.

In an embodiment, the operation of assigning the network coverage blind spot detection task to the target UE according to the at least one of the customer complaint area or the potential blind spot includes assigning the network coverage blind spot detection task to the target UE according to a geographical location, a network topology, and/or task coverage of the at least one of the customer complaint area or the potential blind spot.

In this embodiment, in the process of assigning network coverage blind spot detection tasks, the customer complaint areas and/or potential blind spots are first determined. The network coverage blind spot detection tasks are then assigned to the target UEs according to the geographical locations, network topologies, and/or task coverage of the customer complaint areas and/or potential blind spots, and it should be ensured that all customer complaint areas and/or potential blind spots are detected by corresponding target UEs. The geographical location may be defined by a latitude-and-longitude coordinate range or by the boundaries of the street, residential community, or park involved. The network topology mainly refers to the physical layout of network equipment, such as the connectivity structure, physical connections, and/or inter-node distances among various physical or virtual nodes in a wireless network. The task coverage may be understood as the proportion of a corresponding area in the entire area to be detected. For example, the entire area to be detected includes area c1, area c2, and area c3. For any one of the areas, such as area c1, the higher the proportion of the area occupied by area c1 in the area occupied by the entire area to be detected, the higher the probability that area c1 is a network coverage blind spot, or the more subareas in area c1 that may be network coverage blind spots. Therefore, more target UEs may be assigned to area c1 so that more comprehensive and reliable detection can be performed. For an area with lower task coverage, such as area c2 or area C3, relatively fewer target UEs may be assigned to save resources.

In an embodiment, the method also includes:
130: generating a blind spot data credibility map; and
140: according to the blind spot data credibility map, periodically establishing a network coverage blind spot detection task for an area having credibility lower than a preset threshold.

In this embodiment, the blind spot data credibility map may be generated according to the quality of historical blind spot detection data, customer complaint areas, and/or potential blind spots. The blind spot data credibility map may be used to indicate whether each area is a blind spot and the probability that each area is a blind spot. On this basis, by maintaining the blind spot data credibility map, the network-side node can promptly establish a network coverage blind spot detection task when blind spot detection is required. For example, a network coverage blind spot detection task may be periodically established, such as every week, for an area having credibility lower than a preset threshold.

FIG. 2 is a diagram of a network architecture for network coverage blind spot detection according to an embodiment. As shown in FIG. 2, a blockchain basic module serves as infrastructure of the entire architecture. Blockchain technology may be used to record and verify various tasks and transaction information and to transmit messages. The blockchain basic module ensures that the entire process is secure, credible, and tamper-resistant. The blockchain module includes the following functions:

Data storage: used to persistently store various types of important information, such as task release messages, task transaction information, and task completion information. The data storage may use an underlying distributed-ledger database of the blockchain or an independently designed distributed storage network.

Public-key encryption: Public-key encryption is used for identity identification management and secure information transmission. Public-key cryptography may be used to generate and identify an independent public/private key pair for each participating node, thereby implementing secure data transmission throughout the entire process from release to transaction.

Consensus mechanism: Consensus mechanism is used to maintain consistency among system participating nodes and reach consensus on transaction results, thereby ensuring transaction irreversibility.

Smart contract: Smart contract is used to encode and deploy various business contracts, such as a task distribution contract and a task incentive contract, and to automatically execute relevant transactions and operations.

Peer-to-peer (P2P) network: P2P network is used to provide infrastructure support for data exchange and transmission between participating nodes.

The blind spot calculation and management module is used to analyze and assess live-network data, determine ranges of potential blind spots and/or customer complaint areas, establish and assign blind spot detection tasks, and use blind spot detection data from user-side nodes to perform blind spot calculation and credibility analysis. In addition, the blind spot data credibility map may be maintained so that tasks can be periodically dispatched to different areas in turn, thereby monitoring and managing blind spots. Such architecture helps improve the network coverage and quality and optimize the network performance. For example, the blind spot calculation and management module includes the following functions:
Potential blind spot calculation: Relevant data, including information such as signal strength and a data transmission rate, are extracted from a live network. The extracted data and customer complaint areas are used in analyzing and processing the live network so as to determine potential blind spot areas. Determination algorithms include, but are not limited to, statistical analysis, clustering analysis, and neural-network prediction.
Task establishment and assignment: After a potential blind spot area is determined, the area is divided into specific detection tasks according to a division strategy. The division strategy may take into account factors such as a geographical location, a network topology and/or task coverage so as to reasonably assign tasks and ensure comprehensive blind spot detection coverage. A generated detection task includes detailed information such as a unique task ID, task requirements, a deadline, and an incentive mechanism, for subsequent task dispatch and execution.
Detection data analysis and blind spot calculation: The blind spot calculation and management module receives blind spot detection data submitted by UEs. The data include network-performance test data obtained by the UEs at designated locations. The blind spot calculation and management module performs a credibility analysis on the blind spot detection data to evaluate the accuracy and credibility of the data. Calculation methods include, but are not limited to, a correlation-coefficient-based algorithm, a test-based algorithm, and/or an artificial-intelligence (AI)-based algorithm. According to credible user drive-test data, the blind spot calculation and management module performs blind spot calculation to determine an actually tested network coverage blind spot area.

For example, when a correlation-coefficient-based algorithm is used, a degree of correlation (or degree of approximation) between key variables in blind spot detection data submitted by the UEs, such as the measured area of a blind spot, location coordinates of boundary points, and/or location coordinates of a center point, may be analyzed. A higher degree of correlation may also be understood as indicating that the key variables satisfy a linear relationship, and thus the corresponding blind spot detection data have higher credibility. As another example, a test-based algorithm, such as an analysis-of-variance algorithm, a t-test algorithm, or a rank- sum test algorithm, may be used to test consistency of key variables in the blind spot detection data submitted by the UEs and determine the magnitude of a difference or fluctuation between the key variables. Higher consistency indicates higher credibility of the corresponding blind spot detection data. As still another example, an AI-based algorithm, such as a machine-learning algorithm or a neural-network AI model, may use known sample detection data to train an AI model so that the AI model has a capability of predicting credibility. The blind spot detection data submitted by the UEs are then input into the trained AI model. Thus the credibility of each set of blind spot detection data can be predicted and output. In some scenarios, multiple foregoing algorithms may be used in combination to comprehensively determine the credibility of the blind spot detection data. On this basis, a network coverage blind spot area may finally be determined according to blind spot detection data having credibility greater than or equal to a preset threshold.

Periodic management of blind spot data: The blind spot calculation and management module maintains a blind spot data credibility map for an area. The map records blind spot data credibility information at different locations. The credibility map may be a geographical-location-based heat map or another form of visual chart used to represent blind spot conditions in different areas. According to the blind spot data credibility map, the module periodically selects, in turn, areas having lower credibility in task dispatch.

The task transaction module may use a smart contract of the blockchain to automatically match demands and services, reduce manual confirmation, and lower transaction costs. Contract execution results are publicly recorded in the blockchain, thereby enhancing transaction transparency and result traceability.

The foregoing network architecture guides a large number of users to actively participate through a comprehensive incentive mechanism. Users obtain remuneration by providing measurement services, thereby increasing their sources of income. An incentive mode in which the total amount is divided among participants is also designed, thereby increasing participation in detection in remote areas. For example, in a hotspot area, willingness to participate is high, the number of participants is large, and the number of participants that ultimately meet the criterion is also large, so each user ultimately receives a relatively small incentive. In a remote area, fewer users accept the task, and each user receives a larger share of the incentive. Having multiple users jointly complete a detection task can improve the reliability of detection data and allow fraudulent users to be screened out through cross-comparison. These open and transparent incentive mechanisms may effectively motivate users and ensure the task quality. Broader community resources may ultimately be used to rapidly and accurately collect coverage conditions. The final data are provided to the blind spot calculation module for analysis, thereby assisting network coverage monitoring and optimization.

FIG. 3 is a flowchart of a network coverage blind spot detection method according to an embodiment. The method may be applied to a communication node. The communication node may be a user-side node, such as a UE or a mobile terminal. As shown in FIG. 3, the method of this embodiment includes 210, 220 and 230.

In 210, a task confirmation message for network coverage blind spot detection is received.

In 220, a network coverage blind spot detection task is executed according to the task confirmation message to obtain blind spot detection data.

In 230, the blind spot detection data are sent to a network-side node.

In this embodiment, after receiving the task confirmation message, the target UE may arrive at a designated detection area according to the detection area, the detection target (the network coverage parameter to be detected), the detection time (the task deadline), the detection mode, and/or the incentive mode in the task confirmation message and detect network coverage conditions to obtain blind spot detection data. The blind spot detection data may include information such as the detection area, the detection result of the detection target (network coverage parameter), the detection time of the blind spot detection data, and/or the detection mode. On this basis, users may actively participate in network coverage blind spot detection. Different target UEs may enter areas such as campuses and factory areas according to actual requirements, thereby making full use of UE resources and improving the efficiency and credibility of blind spot detection.

For details not exhaustively described in this embodiment, see any previous embodiment.

In an embodiment, before receiving the task confirmation message for network coverage blind spot detection, the method also includes:
201: in response to receiving a task release message, sending a task acceptance request to the network-side node.

The task release message carries at least one of: a publisher identifier, a task identifier, a task requirement quantity, a detection target, a test plan, a task deadline, an incentive mode, or a task acceptance criterion.

The task acceptance request carries at least one of: a UE identifier, a task identifier, a task acceptance time, or a digest of the task release message.

In an embodiment, executing the network coverage blind spot detection task according to the task confirmation message includes: according to the task confirmation message, measuring network performance corresponding to the detection target in a designated area according to the test plan within the task deadline.

In this embodiment, the target UE may arrive at the designated detection area according to the task confirmation message and detect network coverage conditions in accordance with the test plan within the corresponding task deadline, thereby obtaining blind spot detection data. The test plan includes the test time, the test location, the test equipment, and/or the test method. The blind spot detection data may include information such as the detection area, the detection result of the detection target (network coverage parameter), the detection time of the blind spot detection data, and/or the detection mode.

In an embodiment, the method also includes:
240: in response to the blind spot detection data meeting a task acceptance criterion, receiving a reward.

In this embodiment, the reward received by the target UE may be preset by the network-side node or may be determined according to the submission time of the blind spot detection data. For example, the earlier or faster the blind spot detection data are submitted, the higher the reward obtained by the corresponding target UE. The reward may also be determined according to the credibility of the blind spot detection data. For example, the higher the credibility of the blind spot detection data, the higher the reward obtained by the corresponding target UE. The reward may also be determined according to the type of blind spot detection task. For example, if a detection area corresponding to the blind spot detection task is a private area that is difficult to enter or is an area that is difficult to detect because it is remote or has complex terrain, the corresponding target UE may obtain a higher reward. In some scenarios, the reward obtained by each target UE may also be comprehensively determined according to multiple foregoing factors.

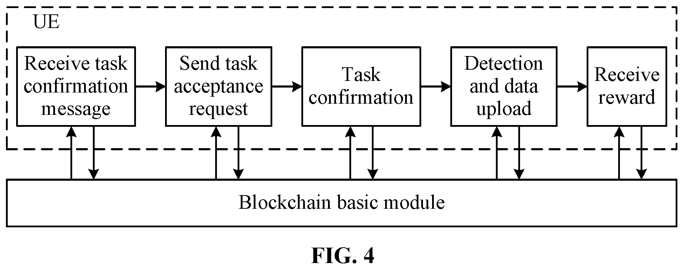

FIG. 4 is a diagram of a user-side architecture for network coverage blind spot detection according to an embodiment. As shown in FIG. 4, a network-side node (operator) may generate task requirements according to a potential blind spot and use a broadcast-message interface on a blockchain to broadcast, to the entire network, a task release message for network coverage blind spot detection. The task release message includes a task publisher ID, a released task ID, a task requirement quantity, a detection target (such as a coverage range, signal strength, and/or a data transmission rate), a test plan (such as test time, a test location, test equipment, and/or a test method), a test recording mode, a task deadline, a total task incentive amount and a calculation method, and/or a task acceptance criterion. These are written into a smart contract of the blockchain.

For a user-side node, after receiving the broadcast, the UE may choose to accept the task and participate in network coverage blind spot detection. When accepting the task, the UE sends a task acceptance request to the network-side node. The task acceptance request includes its own user ID, a task ID, a task acceptance time, and/or a digest of the received task release message. In a smart transaction contract, a return status of the user request is determined according to the task acceptance time and the number of task acceptances. When the number of UEs accepting the task exceeds the task requirement quantity in the contract and the broadcast message, task acceptance by UEs is stopped. A user that successfully accepts the task receives a task confirmation message from the network-side node, and automatically signs a task contract. The task confirmation message includes a task ID, a user ID, and a digest of the task confirmation message.

Blind spot detection and data upload: A UE that has accepted the task starts executing the task. According to task requirements, network coverage blind spot detection is performed at a designated time and location by using designated equipment and a designated test method. The UE collects and records data related to network performance specified by the detection target. The data, such as location coordinates, RSRP, and/or SINR, are then submitted to the network-side node, and an identity ID, a task ID, an upload time, and a digital digest of a receipt packet are returned on chain.

Cross-comparison and quality evaluation: The network-side node performs cross-comparison and quality evaluation on test results submitted by UEs to ensure consistency, accuracy, credibility, and reliability of the data. Consistent and credible data are input into the blind spot calculation module, and IDs of users that meet the criterion are recorded. Cross-comparison may be understood as comparing blind spot detection data submitted by different UEs to determine their consistency or degree of difference. Cross-comparison may be implemented by using a correlation-coefficient-based algorithm, a test-based algorithm, and/or an AI-based algorithm. If blind spot detection data submitted by different UEs for a detection area have relatively high consistency, there is a relatively high probability that the detection area is a network coverage blind spot area. To a certain extent, the corresponding blind spot detection data may also be considered to have relatively high quality or credibility. The quality evaluation may be understood as evaluating the quality of blind spot detection data submitted by each UE. For example, if functions of the corresponding UE are complete, the detection mode of the corresponding UE satisfies a requirement, the upload time of the blind spot detection data is within the task deadline, the blind spot detection data conform to a required format, the value of the detection target is within a preset range, and/or the blind spot detection data do not conflict with blind spot detection data from other UEs, that is, consistency is relatively high, then the corresponding blind spot detection data have relatively high quality.

Reward granting and task information on-chain recording: The smart contract calculates a reward according to a previously broadcast calculation rule according to the number of persons meeting the criterion and the total reward amount, determines the reward, and grants the reward through the smart contract. Incentive calculation methods include, but are not limited to, directly dividing all rewards equally among persons meeting the criterion or decreasing rewards according to submission time. For example, the first 30% of submitters may have a higher reward weight, the reward weight for 31%-80% of submitters may remain unchanged, and the reward weight for the remaining submitters may be reduced. The reward may be in the form of money, points, call credit, or another incentive measure. At the same time, task information, participant IDs, detection results, and the like are recorded on chain to ensure transparency and tamper resistance of the task.

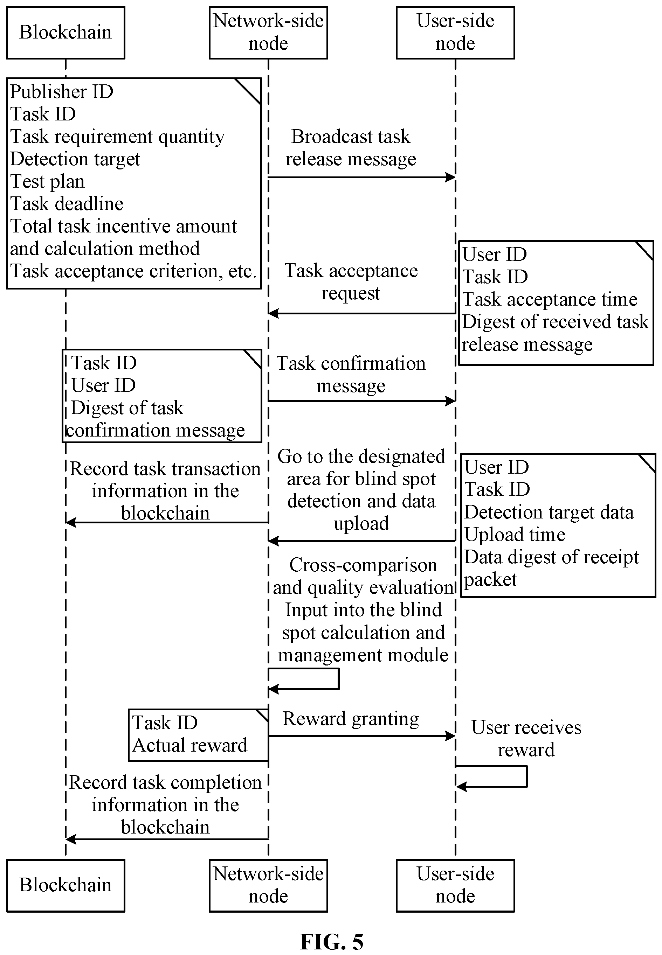

FIG. 5 is a diagram illustrating interaction between a network side and a user side in network coverage blind spot detection according to an embodiment. As shown in FIG. 5, blockchain technology is used to record and verify various tasks and transaction information, thereby ensuring that the entire process is secure, credible, and tamper-resistant. In combination with the network-side architecture and user-side architecture shown in FIG. 2 and FIG. 4, through interaction between the network side and the user side, the network side dispatches tasks to target UEs. Different target UEs may reach designated areas according to actual requirements to perform blind spot detection, thereby making full use of UE resources and improving the efficiency and credibility of blind spot detection.

The network coverage blind spot detection method of the present application is illustrated below through embodiments.

### Embodiment one

In this embodiment, tasks may be allocated according to customer complaint areas. A target area is a suburban scenario, blind spot detection data from all user-side nodes meet the criterion, and an incentive mode is decreasing allocation according to time.

The network-side node (operator) first releases a task. A task release message includes detailed information such as a task ID, a task requirement quantity, a detection target, a test plan, a task deadline, a total task incentive amount and a calculation method, and a task acceptance criterion. In this scenario, the offered reward is RMB 200, and the required number of UEs for the task is five, namely, five target UEs.

After user-side nodes (UEs) receive the task, a total of ten UEs attempt to send task acceptance requests to the operator, each request including a user ID, a task ID, and a task acceptance time.

The smart contract selects five UEs as target UEs according to the task acceptance time and task acceptance capability and sends task confirmation messages. Each task confirmation message includes a task ID, a user ID, and a digest of the task confirmation message.

After receiving the task confirmation messages, the five target UEs perform blind spot detection in the suburban area according to task requirements and record detection target data, an upload time, and a data digest. The target UEs upload the blind spot detection data to the operator.

The operator performs cross-comparison and quality evaluation on the received blind spot detection data and, according to the task acceptance criterion, determines in this embodiment that all of the five target UEs satisfy the task quality requirement.

The smart contract allocates the rewards according to the number of UEs that meet the criterion and the incentive mode, with the reward amounts decreasing according to the order of submission. In this scenario, the target UEs can receive rewards of RMB 60, RMB 50, RMB 40, RMB 35, and RMB 15 in sequence.

### Embodiment two

In this embodiment, tasks may be allocated according to potential blind spots calculated from the live-network data, the target area is in a factory-area scenario, only blind spot detection data meet the criterion, and the incentive mode is to allocate rewards equally among the UEs that meet the criterion.

The operator releases a task, including detailed information such as a task ID, a task requirement quantity, a detection target, a test plan, a task deadline, a total task incentive amount, a calculation method, and a task acceptance criterion. In this scenario, the offered reward is RMB 100, and the required number of UEs for the task is five, namely, five target UEs.

After receiving the task, a total of five UEs attempt to send task acceptance requests to the operator, each request including a user ID, a task ID, and a task acceptance time.

The smart contract selects five UEs as target UEs according to the task acceptance time and task acceptance capability and sends task confirmation messages. Each task confirmation message includes a task ID, a user ID, and a digest of the task confirmation message.

After receiving the task confirmation messages, the five target UEs perform blind spot detection in the factory area according to task requirements and record detection target data, an upload time, and a data digest. The target UEs upload the blind spot detection data to the operator.

The operator performs cross-comparison and quality evaluation on the received blind spot detection data and, according to the task acceptance criterion, determines that four target UEs satisfy the task quality requirement.

According to the number of UEs that meet the criterion and the incentive mode, the smart contract allocates the rewards equally among the UEs that meet the criterion according to the number of UEs that meet the criterion. In this scenario, the total reward amount is RMB 100, four target UEs ultimately meet the criterion, and each qualified target UE can receive a reward of RMB 25.

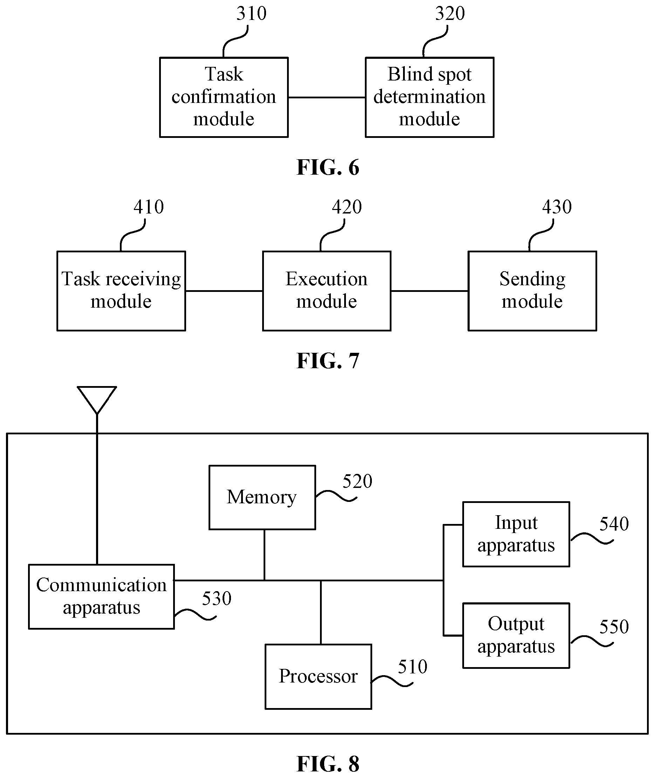

An embodiment of the present application provides a network coverage blind spot detection apparatus. FIG. 6 is a diagram illustrating the structure of a network coverage blind spot detection apparatus according to an embodiment. As shown in FIG. 6, the network coverage blind spot detection apparatus includes a task confirmation module 310 and a blind spot determination module 320. The task confirmation module 310 is configured to send a task confirmation message for network coverage blind spot detection to a target UE and store corresponding task transaction information in a blockchain. The blind spot determination module 320 is configured to, in response to receiving blind spot detection data from the target UE, determine a network coverage blind spot according to the blind spot detection data, grant a reward to the target UE, and store task completion information in the blockchain.

In an embodiment, before sending the task confirmation message to the target UE, the apparatus also includes a broadcasting module configured to broadcast a task release message for network coverage blind spot detection and write the task release message into a smart contract of the blockchain. The task release message carries at least one of: a publisher identifier, a task identifier, a task requirement quantity, a detection target, a test plan, a task deadline, an incentive mode, or a task acceptance criterion.

In an embodiment, before sending the task confirmation message to the target UE, the apparatus also includes a task acceptance module and a selection module. The task acceptance module is configured to receive a task acceptance request from at least one UE. The selection module is configured to determine, from the at least one UE according to a task acceptance time and the number of task acceptances, a target UE that executes a network coverage blind spot detection task. The task acceptance request carries at least one of: a UE identifier, a task identifier, a task acceptance time, or a digest of a task release message.

In an embodiment, the blind spot determination module 320 includes: a comparison unit, an acceptance unit, and a blind spot determination unit. The comparison unit is configured to, in response to receiving the blind spot detection data from multiple target UEs, compare blind spot detection data of the multiple target UEs and evaluate the quality of blind spot detection data of each target UE. The acceptance unit is configured to determine blind spot detection data of a target UE that meets a task acceptance criterion according to a task acceptance criterion and the quality of the blind spot detection data of each target UE. The blind spot determination unit is configured to determine the network coverage blind spot according to the blind spot detection data that meet the criterion.

In an embodiment, the blind spot determination module 320 includes a first granting module configured to grant the reward to the target UE according to a first incentive mode. The first incentive mode means that rewards are granted to multiple target UEs according to a chronological order of submission times of blind spot detection data that meet a task acceptance criterion, and the rewards corresponding to the multiple target UEs decrease in sequence.

In an embodiment, the blind spot determination module 320 includes a second granting module configured to grant the reward to the target UE according to a second incentive mode. The second incentive mode means that rewards are granted to multiple target UEs corresponding to blind spot detection data that meet a task acceptance criterion, and the rewards corresponding to the multiple target UEs that meet the criterion are equal.

In an embodiment, before sending the task confirmation message to the target UE, the apparatus also includes an assignment module configured to assign a network coverage blind spot detection task to the target UE according to at least one of a customer complaint area or a potential blind spot. The potential blind spot is determined by at least one of statistics, clustering, or neural-network prediction performed on the current network coverage data.

In an embodiment, the assignment module is configured to assign the network coverage blind spot detection task to the target UE according to a geographical location, a network topology, and/or task coverage of the at least one of the customer complaint area or the potential blind spot.

In an embodiment, the apparatus also includes a generation module and a task establishment module. The generation module is configured to generate a blind spot data credibility map. The task establishment module is configured to, according to the blind spot data credibility map, periodically establish a network coverage blind spot detection task for an area having credibility lower than a preset threshold.

The network coverage blind spot detection apparatus of this embodiment and the network coverage blind spot detection method of any previous embodiment belong to the same concept. For technical details not described in detail in this embodiment, reference may be made to any previous embodiment. This embodiment has the same effects as the network coverage blind spot detection method performed.

An embodiment of the present application provides a network coverage blind spot detection apparatus. FIG. 7 is a diagram illustrating the structure of a network coverage blind spot detection apparatus according to an embodiment. As shown in FIG. 7, the network coverage blind spot detection apparatus includes a task receiving module 410, an execution module 420, and a sending module 430. The task receiving module 410 is configured to receive a task confirmation message for network coverage blind spot detection. The execution module 420 is configured to execute a network coverage blind spot detection task according to the task confirmation message to obtain blind spot detection data. The sending module 430 is configured to send the blind spot detection data to a network-side node.

In an embodiment, before receiving the task confirmation message for network coverage blind spot detection, the apparatus also includes a request module configured to, in response to receiving a task release message, send a task acceptance request to the network-side node. The task release message carries at least one of: a publisher identifier, a task identifier, a task requirement quantity, a detection target, a test plan, a task deadline, an incentive mode, or a task acceptance criterion. The task acceptance request carries at least one of: a UE identifier, a task identifier, a task acceptance time, or a digest of the task release message.

In an embodiment, the execution module 420 is configured to, according to the task confirmation message, measure network performance corresponding to the detection target in a designated area according to the test plan within the task deadline.

In an embodiment, the apparatus includes a reward receiving module configured to, in response to the blind spot detection data meeting a task acceptance criterion, receive a reward.

The network coverage blind spot detection apparatus of this embodiment and the network coverage blind spot detection method of any previous embodiment belong to the same concept. For technical details not described in detail in this embodiment, reference may be made to any previous embodiment. This embodiment has the same effects as the network coverage blind spot detection method performed.

An embodiment of the present application provides a communication node. FIG. 8 is a diagram illustrating a hardware structure of a communication node according to an embodiment. As shown in FIG. 8, the communication node of the present application includes a processor 510 and a memory 520. One or more processors 510 may be provided in the communication node, with one processor 510 shown as an example in FIG. 8. The memory 520 is configured to store one or more programs. The one or more programs, when executed by the one or more processors 510, cause the one or more processors 510 to perform the network coverage blind spot detection method of any embodiment of the present application.

The communication node also includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners, and the connection via a bus is shown as an example in FIG. 8.

The input apparatus 540 may be configured to receive input numerical or character information and generate key signal input related to user settings and function control of the communication node. The output apparatus 550 may include a display device such as a display screen.

The communication apparatus 530 may include a receiver and a sender. The communication apparatus 530 is configured to transmit and receive information under the control of the processor 510.

As a computer-readable storage medium, the memory 520 may be configured to store software programs, computer-executable programs, and modules, such as program instructions/modules corresponding to the network coverage blind spot detection method in embodiments of the present application (for example, the task confirmation module 310 and the blind spot determination module 320 in the network coverage blind spot detection apparatus). The memory 520 may include a program storage region and a data storage region, where the program storage region may store an operating system and an application program required by at least one function, and the data storage region may store data and the like created according to the use of the communication node. Additionally, the memory 520 may include a high-speed random-access memory and may also include a nonvolatile memory such as at least one disk memory, a flash memory, or another nonvolatile solid-state memory. In some examples, the memory 520 may also include memories remote relative to the processor 510 and accessible to the communication node via a network. Examples of the network include, but are not limited to, the Internet, an intranet, a local area network, a mobile communication network, and a combination thereof.

An embodiment of the present application provides a storage medium. The storage medium stores a computer program which, when executed by a processor, causes the processor to perform the network coverage blind spot detection method of any embodiment of the present application. The method includes sending a task confirmation message for network coverage blind spot detection to a target UE and storing corresponding task transaction information in a blockchain; and in response to receiving blind spot detection data from the target UE, determining a network coverage blind spot according to the blind spot detection data, granting a reward to the target UE, and storing task completion information in the blockchain.

Alternatively, the method includes receiving a task confirmation message for network coverage blind spot detection; executing a network coverage blind spot detection task according to the task confirmation message to obtain blind spot detection data; and sending the blind spot detection data to a network-side node.

A computer storage medium according to the embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Examples of the computer-readable storage medium include (a non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc ROM (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

Example embodiments of the present application are described above and are not intended to limit the scope of the present application.

It is to be understood by those skilled in the art that the term "user terminal" encompasses any suitable type of radio user device, for example, a mobile phone, a portable data processing apparatus, a portable web browser, or a vehicle-mounted mobile station.

Generally speaking, multiple embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A network coverage blind spot detection method, applied to a network-side node, comprising:
sending a task confirmation message for network coverage blind spot detection to a target user equipment, UE, and storing corresponding task transaction information in a blockchain; and
in response to receiving blind spot detection data from the target UE, determining a network coverage blind spot according to the blind spot detection data, granting a reward to the target UE, and storing task completion information in the blockchain.

2. The method of claim 1, before sending the task confirmation message to the target UE, further comprising:
broadcasting a task release message for network coverage blind spot detection and writing the task release message into a smart contract of the blockchain;
wherein the task release message carries at least one of: a publisher identifier, a task identifier, a task requirement quantity, a detection target, a test plan, a task deadline, an incentive mode, or a task acceptance criterion.

3. The method of claim 1, before sending the task confirmation message to the target UE, further comprising:
receiving a task acceptance request from at least one UE; and
determining, from the at least one UE according to a task acceptance time and the number of task acceptances, a target UE that executes a network coverage blind spot detection task;
wherein the task acceptance request carries at least one of: a UE identifier, a task identifier, a task acceptance time, or a digest of a task release message.

4. The method of claim 1, wherein in response to receiving the blind spot detection data from the target UE, determining the network coverage blind spot according to the blind spot detection data comprises:
in response to receiving the blind spot detection data from a plurality of target UEs, comparing the blind spot detection data of the plurality of target UEs and evaluating a quality of blind spot detection data of each target UE;
determining blind spot detection data of a target UE that meets a task acceptance criterion according to the task acceptance criterion and the quality of the blind spot detection data of each target UE; and
determining the network coverage blind spot according to the blind spot detection data that meet the task acceptance criterion.

5. The method of claim 1, wherein granting the reward to the target UE comprises:
granting the reward to the target UE according to a first incentive mode, wherein in the first incentive mode, rewards are granted to a plurality of target UEs according to a chronological order of submission times of blind spot detection data that meet a task acceptance criterion, and the rewards corresponding to the plurality of target UEs decrease in sequence.

6. The method of claim 1, wherein granting the reward to the target UE comprises:
granting the reward to the target UE according to a second incentive mode, wherein in the second incentive mode, rewards are granted to a plurality of target UEs corresponding to blind spot detection data that meet a task acceptance criterion, and the rewards corresponding to the plurality of target UEs that meet the task acceptance criterion are equal.

7. The method of claim 1, before sending the task confirmation message to the target UE, further comprising:
assigning a network coverage blind spot detection task to the target UE according to at least one of a customer complaint area or a potential blind spot;
wherein the potential blind spot is determined by at least one of statistics, clustering, or neural-network prediction performed on current network coverage data.

8. The method of claim 7, wherein assigning the network coverage blind spot detection task to the target UE according to the at least one of the customer complaint area or the potential blind spot comprises:
assigning the network coverage blind spot detection task to the target UE according to a geographical location, a network topology, and/or task coverage of the at least one of the customer complaint area or the potential blind spot.

9. The method of claim 1, further comprising:
generating a blind spot data credibility map; and
according to the blind spot data credibility map, periodically establishing a network coverage blind spot detection task for an area having credibility lower than a preset threshold.

10. A network coverage blind spot detection method, applied to a UE, comprising:
receiving a task confirmation message for network coverage blind spot detection;
executing a network coverage blind spot detection task according to the task confirmation message to obtain blind spot detection data; and
sending the blind spot detection data to a network-side node.

11. The method of claim 10, before receiving the task confirmation message for network coverage blind spot detection, further comprising:
in response to receiving a task release message, sending a task acceptance request to the network-side node;
wherein the task release message carries at least one of: a publisher identifier, a task identifier, a task requirement quantity, a detection target, a test plan, a task deadline, an incentive mode, or a task acceptance criterion; and
the task acceptance request carries at least one of: a UE identifier, a task identifier, a task acceptance time, or a digest of the task release message.

12. The method of claim 11, wherein executing the network coverage blind spot detection task according to the task confirmation message comprises:
according to the task confirmation message, measuring network performance corresponding to the detection target in a designated area according to the test plan within the task deadline.

13. The method of claim 10, further comprising:
in response to the blind spot detection data meeting a task acceptance criterion, receiving a reward.

14. A communication node, comprising a memory and at least one processor, wherein
the memory is configured to store at least one program; and
when executed by the at least one processor, the at least one program causes the at least one processor to perform the network coverage blind spot detection method of any one of claims 1 to 13.

15. A computer-readable storage medium storing a computer program which, when executed by a processor, causes the processor to perform the network coverage blind spot detection method of any one of claims 1 to 13.
